# EUROPEAN PATENT SPECIFICATION

(11) **EP 0 429 104 B1**
(45) Date of publication and mention of the grant of the patent: **09.06.1993**
(21) Application number: 90202478.5
(22) Date of filing: 18.09.1990
(51) Int. Cl.: B60B 1/00, B60B 21/00, B21D 53/30

(54) **Method and apparatus for manufacturing wheel rims**
Methode und Vorrichtung zur Herstellung von Radfelgen
Méthode et dispositif pour la fabrication des jantes de roues

(30) Priority: 21.11.1989 NL 8902872
(43) Date of publication of application: 29.05.1991
(73) Proprietor: HOLLAND MECHANICS B.V., NL-1442 LC Purmerend (NL)
(72) Inventor: Best, Bob, NL-1462 PD Middenbeemster (NL); Janssen, Erik Christianus, NL-2035 EZ Haarlem (NL)
(74) Representative: Metman, Karel Johannes

(56) References cited:
- BE-A- 493 392
- FR-A- 1 097 211
- US-A- 1 508 570
- US-A- 4 164 133
- US-A- 4 365 492

## Description

The invention relates to a method and apparatus for manufacturing wheel rims from a section piece bent into a helical spiral having a plurality of windings.

In a known method of this type a spiral is placed into a clamping band, whereafter the spiral is clamped to the proper diameter and the spiral is cut radially on a place so as to form a plurality of separate rim sections. Then the rim sections are removed from the clamping band and, one by one, they are connected at their ends by dowel pins, for example, or in another way so as to form a closed rim, as disclosed in US-A-4 365 492.

It is an object of the invention to provide a method and apparatus, with which cutting and connecting the ends of the wheel rims can take place substantially automatically and simultaneously for all wheel rims.

For this purpose the invention proposes in the first place a method of manufacturing wheel rims, in particular for bicycle wheels, wherein a section piece bent to a helical spiral having a plurality of windings is placed into a clamping band, said clamping band is contracted in circular configuration to the diameter desired for the rim, whereafter the rim spiral is cut into a number of rims corresponding to the number of whole windings, and subsequently, after relief of the clamping band, both ends of each rim section formed by cutting are displaced laterally with respect to each other such that said ends are positioned opposite to each other, whereafter the clamping band is contracted again until both ends of each rim section abut and these ends are interconnected.

In this way both the cutting operation and the connection of the ends of the rim sections formed by cutting can take place while the rim sections remain in the clamping band so that the method can be performed considerably more efficient and it has been made possible to form simultaneously in each cycle a number of closed rims corresponding to the number of windings of the spiral.

For performing the method the invention provides an apparatus for manufacturing wheel rims, in particular for bicycle wheels, comprising a clamping band for receiving a section piece bent into a helical spiral having a plurality of windings, means for contracting the clamping band in circular configuration and expanding it again, a cutting means for making a radial cut into the windings of the spiral, cutting clamps on either side of the cutting means for laterally clamping the windings of the spiral prior to cutting them and for displacing both ends of each rim section made by cutting sideways with respect to each other, and means for interconnecting the abutting ends of each rim section.

The invention will hereafter be elucidated with reference to the drawing showing an embodiment of the invention by way of example.

Fig. 1 and 2 show a front view and a side view respectively of an embodiment of the apparatus for manufacturing wheel rims according to the invention.

Fig. 3 is a very schematic front view of a modified embodiment of the apparatus of fig. 1, in which several parts are omitted for the sake of clarity.

Fig. 4 and 5 are a plan view and a side view respectively showing the means for positioning dowel pins for connecting the rim ends, on an enlarged scale.

The embodiment of the apparatus for manufacturing wheel rims from a section piece bent into a helical spiral having a plurality of windings as shown in the drawing includes a frame 1 constructed of posts and girders, that has been placed on the floor. The heart of the apparatus consists of a clamping band 2 including an elongated elastically bendable steel plate having two ends and being bent into a substantial circular configuration. In the case as shown the clamping band 2 is adjustable to the diameter of the rims to be manufactured owing to the fact that the plate of the clamping band 2 consists of a plurality of plate parts adjustably attached to each other by pin-slot-connections shown at 3. The clamping band 2 is secured on both its ends to levers 4 positioned symmetrically to a plane of symmetry A-A and being linked to a girder of the frame 1 by means of a shaft 5 and the lower ends of the levers 4 being in engagement with a spindle shaft 7 by means of a pivotable spindle nut 6. The spindle shaft 7 is journalled in the frame and carries a sprocket wheel 8 in its centre between both levers 4, the sprocket wheel 8 being adapted to be rotated by means of a chain and motor (not shown). The threads of the spindle shaft 7 have an opposite pitch on both sides of the sprocket wheel 8, so that a rotation of the spindle shaft causes an opposite but equal pivoting movement of the levers 4. The maximum pivotal displacement of the levers 4 is determined by stops 9 adjustably fixed to the frame. The pivoting movement of the levers 4 is used for contracting and expanding the clamping band 2 during the manufacture of the wheel rims, as will be explained in more detail later on.

At the ends of the claming band 2 is further provided a cutting clamp 10 consisting of two clamping parts movable to and away from each other symmetrically in longitudinal direction of the clamping band 2, by means of a screw spindle which is drivable by means of an electric motor 12 through a cardan shaft 11 having a sleeve. Furthermore the cutting clamps 10 are adapted to be adjusted with respect to each other in transverse direction of the clamping band 2.

In the plane of symmetry A-A of the clamping band 2 there is provided a circular saw 13, the shaft of which may be driven by an electric motor 14, which is attached to a platform 15, through a chain and sprocket wheels (not shown). The platform 15 is pivotable about a pivot shaft 16 connected to the frame 1, by means of a cylinder-piston-assembly 17. The circular saw 13 is displaceable with respect to the platform 15 by means of a cylinder-piston-assembly 18. Around the circular saw 13 is disposed a cap 19 in which an underpressure may be produced by an exhaust unit 20 communicating with the cap 19 and adapted to exhaust sawing dust during the sawing operation.

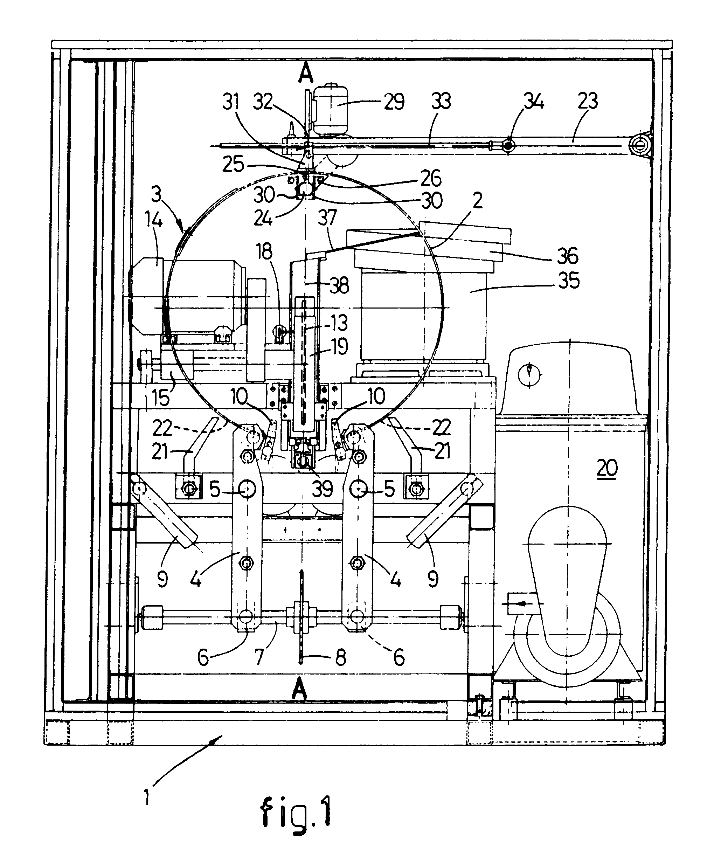

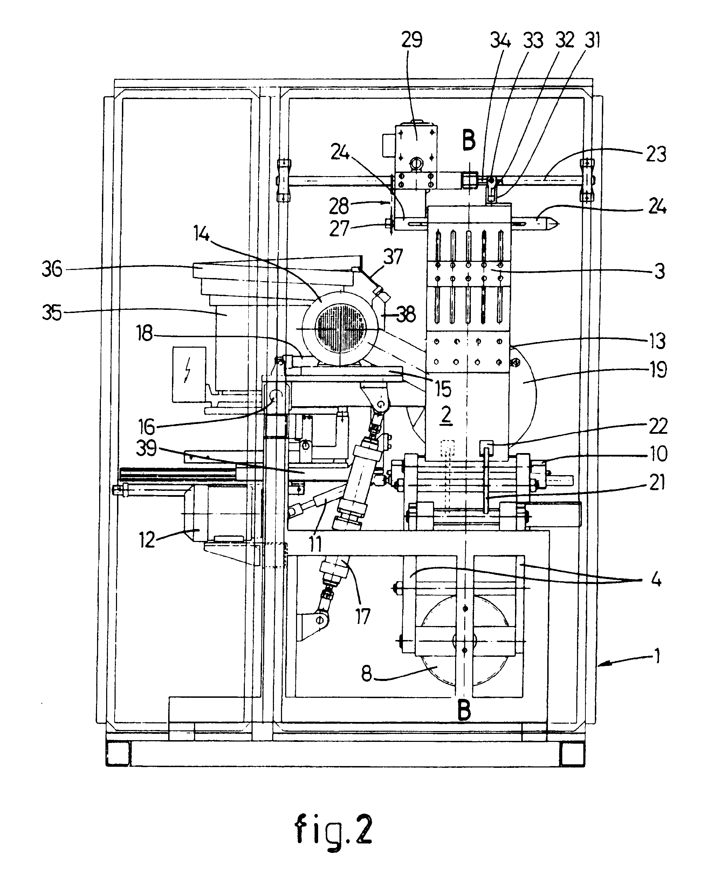

Two fixtures 21 are pivotally provided in a non-shown manner under the clamping band 2, which fixtures 21 are positioned symmetrically to the plane A-A in the front view of fig. 1, but in the side view of fig. 2 they are offset with respect to each other and with respect to a plane of symmetry B-B a distance in transverse direction of the clamping band 2. The fixtures 21 are adapted to engage the free ends of the spiral from which the rims are to be manufactured, for which purpose the free ends of the spiral project through openings 22 in the clamping band 2.

Above the clamping band is a supporting girder structure 23 of the frame 1 supporting a cantilevered supporting rod 24 extending through the clamping band 2 near the upper side thereof and being adapted to initially support the spiral placed within the clamping band 2. The supporting rod comprises one rear clamping cam 25 and two front clamping cams 26, which are movable towards and away from each other symmetrically by means of a spindle shaft 27 extending through the supporting rod 24 and being driven by an electric motor 29 through a chain drive 28. The front clamping cams 26 are provided on pivot arms 30 for pivoting the clamping cams 26 downwardly when they are displaced outwardly so as to enable a rim spiral to be suspended from the supporting rod 24. The clamping cams 25 and 26 move symmetrically to the plane B-B (see fig. 2) so that they are adapted to clamp a spiral placed within the clamping band 2 with respect to the plane B-B.

On the outer side of the clamping band 2 near the upper side thereof is provided a bracket 31 which is linked to a clamping slide 32, which clamping slide 32 is slidably and fixedly provided on a rod 33 attached on one end to the supporting girder structure 23 by means of a pivot 34. The bracket 31 and the suspension thereof are intended to prevent tilting or setting movements of the clamping band 2 and can be adapted to each diameter adjustment of the clamping band 2.

The apparatus further comprises means for automatically supplying and positioning dowel pins which are used for interconnecting the ends of the cut rim sections to form the closed rims. These means include a shaking drum 35 having a helical supply path 36 connecting to a conveying chute 37 opening into a vertical cartridge 38 in which a plurality of dowel pins are kept ready in the proper position. Under the cartridge 38 is provided a slide 39 which is displaceable between a retracted loading position, in which the slide is loaded with dowel pins from the cartridge 38, and an extended positioning position, in which the dowel pins loaded on the slide 39 are positioned accurately in front of holes in the ends of the formed rim sections to be connected. For this purpose the dowel pins may be moved by the slide 39 both in horizontal and vertical directions.

The operation of the apparatus and the possible method of manufacturing wheel rims is as follows:

First of all, a section piece which, in advance, is bent into a helical spiral having a plurality of windings, is suspended from the horizontal supporting rod 24 whereafter the spiral is clamped symmetrically with respect to the plane B-B by means of the clamping cams 25 and 26.

Then the clamping band 2 is contracted into a circle by means of the levers 4 such that the inner diameter of the clamping band 2 corresponds to the desired outer diameter of the rims to be manufactured. The cutting clamps 10 centre the spiral with respect to the plane B-B without actually clamping it. Upon or after contraction of the clamping band 2 the fixtures 21 are pressed with great force against the spiral ends which are straight and therefore project out of the openings 22 in the clamping band 2, in order to tighten the spiral against the inner side of the clamping band. The exact diameter of the rims to be manufactured is set then. Both cutting clamps 10 on both sides of the plane of symmetry A-A subsequently clamp the windings of the spiral to each other, so that the spiral is fixed with respect to the clamping band 2.

Then the fixtures 21 are returned outwardly to a starting position and the cutting clamp 10, on the right in fig. 1, is opened. The clamping band 2 is then expanded by slightly pivoting the levers 4 in order to remove the strain in the spiral and consequently prevent the windings of the spiral from being pushed against the saw blade of the circular saw 13 when they are cut. The sawing clamp 10 on the right is then closed again for clamping the spiral on that place.

As next step the circular saw 13 is turned and moved downwardly by means of the cylinder-piston-assemblies 18 and 17, while the circular saw 13 is driven by the electric motor 14. The circular saw 13 is first brought close above the rim spiral with a quick approach movement, whereafter the movement is slowed down so as to saw with a slow feed motion. With this slow feed motion the circular saw 13 is sawing with its teeth moving downwardly through the windings of the section piece thereby preventing the generation of burrs on the visible side, that is the inner side of the rim.

When the circular saw 13 has cut through the windings of the spiral the circular saw 13 stops with the blade thereof between the formed ends of the separate rim sections. Then the cutting clamps 10 open and the cut-off end pieces of the spiral are pushed away mecanically.

Next, the cutting clamps 10 close in a symmetrical way so as to displace both ends of the separate formed rim sections along half of the width of a rim section or half of the width of a winding of the spiral with respect to the symmetrical cross-plane B-B in transverse direction thereby oppositely aligning both ends of each rim section. Without an actual clamping action of the cutting clamps 10, the clamping band 2 is contracted by the levers 4 so as to push the ends of the formed rim sections against the blade of the circular saw 13 and centre them in this manner. Then the cutting clamps 10 are closed with force in order to fix the rim sections again with respect to the clamping band 2.

The clamping band 2 is then opened by the levers 4 to be able to remove the circular saw 13 and to make room for the supply of dowel pins with which both ends of the separate rim sections should be interconnected. During this opening movement of the clamping band 2 the cutting clamps 10 carry along the rim sections so as to expand them too. The dowel pin slide 39 including, in a proper distribution, dowel pins which were automatically supplied from the cartridge 38, is displaced in horizontal and vertical directions such that the dowel pins are positioned exactly in front of respective holes in the ends of the rim sections. In most cases two dowel pins per rim are used.

When the dowel pins are positioned in the right manner by the slide 39, the clamping band 2 is slightly contracted so as to push the ends of the rim sections over the end portions of the dowel pins. The dowel pins are tapered on their ends so that, also in case of a slight misalignment of the dowel pins with respect to the holes in the ends of the rim sections, the dowel pins are introduced into the holes in the ends of the rim sections. The dowel pin slide 39 is then moved back to the starting position in which the slide 39 is filled again with new dowel pins from the cartridge 38.

In this stage it is possible to have the apparatus stopped in order to enable an operator to check whether all dowel pins are introduced into the holes in the ends of the rim sections in a proper way. Of course it is also possible to let the apparatus perform a check, for instance an optical checking, whereby the apparatus can be stopped and an alarm can be given when a dowel pin is missing or is not properly placed.

The clamping band 2 is then closed for the last time such that both ends of the separate rim sections contact with each other whereby the ends are connected to each other rigidly by the dowel pins and a fully closed rim being formed. The clamping band 2, the cutting clamps 10 and the clamping cams 25 and 26 are then opened again so that the shaped separate rims can be taken out of the apparatus and a next spiral can be placed again into the apparatus.

All drives for the several parts for performing the necessary movements are controlled by a central microprocessor so that the method is performed fully automatically.

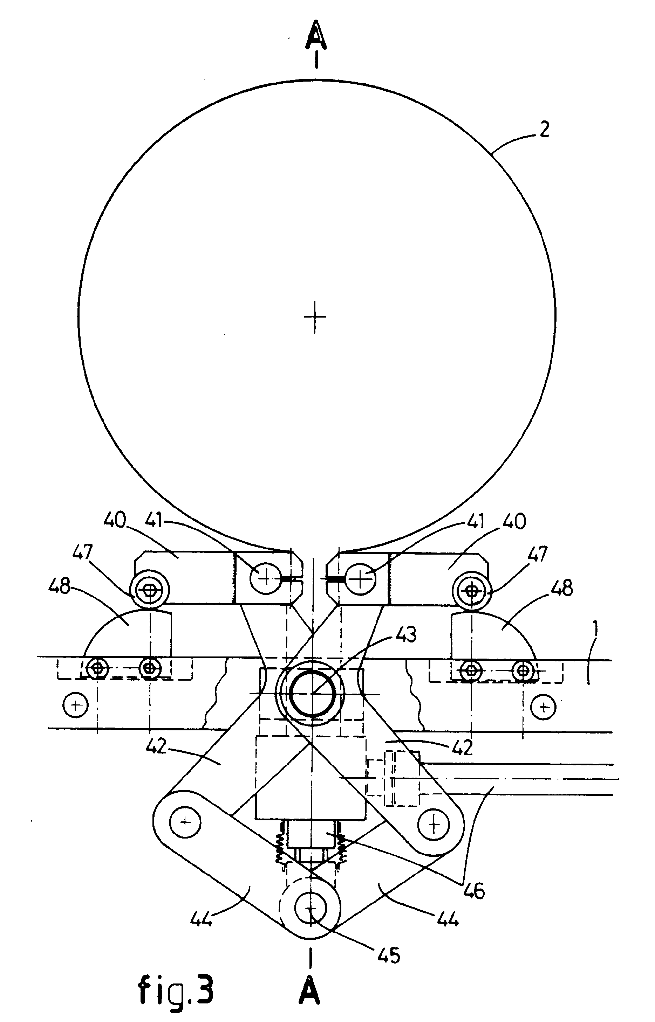

Fig. 3 shows in a very schematic way a modified apparatus for manufacturing wheel rims according to the invention, in which in principle only the modified means for contracting and expanding the clamping band 2, which is shown out of scale, are illustrated. These means therefore replace the parts 4-9 in fig. 1.

In this embodiment the means for contracting into a circle and expanding the clamping band include two fastening means 40, each of which has a respective free end of the clamping band 2 ridgidly attached thereto. Each fastening means 40 is clamped about a respective shaft 41, which is journalled on the upper end of a double-armed lever 42. Both levers 42 are symmetrically journalled on a shaft 43 and are connected on their lower ends by connecting means 44 of which the connecting shaft 45 is movable up and down in the vertical plane of symmetry A-A by means of a drive 46 for contracting and expanding the clamping band by moving the ends of this clamping band 2 towards and away from each other.

The fastening means 40 are provided on their outer end facing away from the respective shaft 41 with a cam roller 47 adapted to roll on a respective cam 48. Each cam 48 is adjustably, preferably vertically adjustably, attached to the frame 1.

The described parts of the means for contracting and expanding the clamping band 2 are arranged and dimensioned in such a way that the following operation is obtained.

When the levers 42 are adjusted, the fastening means 40 will undergo a movement depending from the displacement of the shaft 41 as well as from the displacement of the cam roller 47 over the respective cam 48. The profile of the cam 48 is chosen such that a movement of the free ends of the clamping band 2 is produced, which causes the upper point of the clamping band 2 to substantially remain stationary. As a consequence thereof the clamping band 2 could be suspended from a fixed point. Furthermore the fastening means 40 is kept at the same angle with respect to the centre point of the clamping band 2, which moves in the vertical plane of symmetry. In this manner the clamping band 2 is expanded precisely circular and the fastening means 40 is not turned with respect to the end of the clamping band 2 connected therewith so that the fastening means 40 is prevented from exerting large bending forces on the connection to the end of the clamping band 2. If a clamping band 2 of another diameter is used, the cams 48 can be adjusted in order to effect a movement of the fastening means 40 adapted to this other clamping band 2.

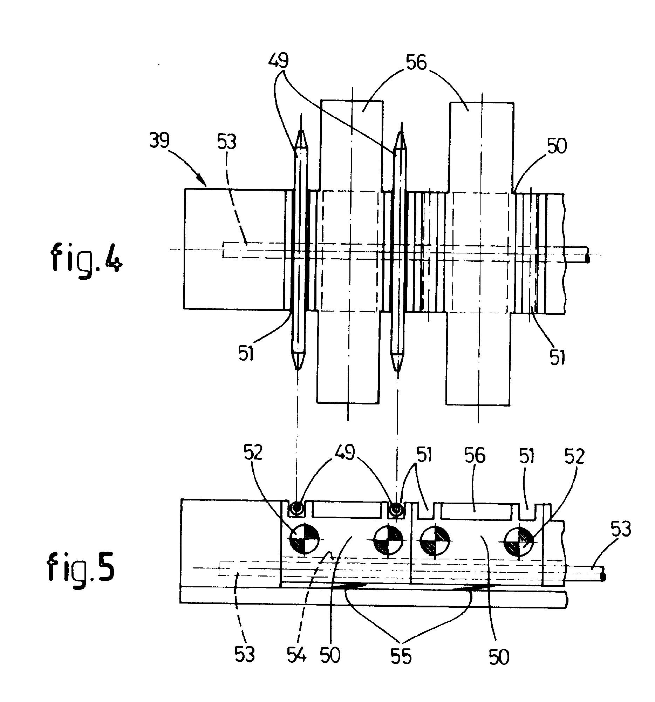

The fig. 4 and 5 show a special embodiment of the earlier mentioned slide 39 for positioning dowel pins 49 loaded thereon in front of the holes in the ends of the formed rim sections to be connected. In this embodiment each pair of dowel pins 49 belonging to one rim section to be manufactured is disposed in a separate holder 50. For this purpose each holder 50 includes 2 grooves 51 extending transverse to the slide 39 and having magnets 52 placed under them. The holders 50 are attached to the slide 39 in a movable manner by means of a rod 53 of the slide 39 projecting through slack bores 54 in the holders 50. A spring means 55 between the slide 39 and the underside of the cam holder loads the respective holder 50 upwardly. Due to this mounting of the holders 50 they are slightly movable up and down and tiltable about the rod 53 independent of each other. As a consequence thereof the pairs of dowel pins 49 are enabled to be positioned well in front of the holes in the ends of the respective rim sections, also when these ends are clamped on different levels. To bring the pairs of dowel pins 49 automatically and properly in front of the holes in the rim ends, each holder 50 is equipped with locating tongues 56 extending oppositely in transverse direction and being dimensioned so as to fit precisely into the rim bed of a wheel rim to be manufactured. Therefore, when the locating tongues 56 are moved upwards and are contacted with the rim bed of the ends of the respective rim sections, the dowel pins 49 are also automatically positioned in the right manner in front of the holes in those ends, wherein the resilient freedom of movement of the holders 50 allow an independent positioning of the holders. As a consequence thereof the apparatus can function even more reliable.

From the above it will be clear that the invention provides a method and apparatus for manufacturing wheel rims, in which from a spiral-shaped bent section piece can be formed a plurality of rims in a fully or almost fully automatic way. In practice the spiral of the section piece includes preferably slightly more than three windings, so that at one time three rims can be made out of it, but in principle the number of windings of the spiral can be chosen freely.

The invention is not restricted to the embodiment described herein before and shown in the drawing by way of example, which can be varied in different manners within the scope of the invention, as defined by the appended claims.

## Claims

1. Method of manufacturing wheel rims, in particular for bicycle wheels, wherein a section piece bent to a helical spiral having a plurality of windings is placed into a clamping band (2), said clamping band (2) is contracted in circular configuration to a diameter desired for the rim, characterised in that the rim spiral is cut into a number of rims corresponding to the number of whole windings, and subsequently, after relief of the clamping band (2), both ends of each rim section formed by cutting are displaced laterally with respect to each other such that said ends are positioned opposite to each other, whereafter the clamping band (2) is contracted again until both ends of each rim section abut and these ends are interconnected.

2. Method according to claim 1, wherein a pressure force is exerted on the ends of the spiral during the first contraction of the clamping band (2) thereby pressing the spiral tight against the clamping band (2).

3. Method according to claim 1 or 2, wherein the windings of the spiral are clamped on either side of the cuts to be made.

4. Method according to one of the preceding claims, wherein the spiral is cut in a circumferential relieved condition.

5. Method according to one of the preceding claims, wherein the length of the spiral is chosen slightly bigger than the sum of the circumferencial length of the number of rims to be manufactured, and wherein the cut-off end parts of the spiral are removed after cutting.

6. Method according to one of the preceding claims, wherein the cuts are made by means of a saw-blade (13) and wherein the saw-blade (13) remains temporarily in the cuts after cutting and, after sideways removal of the ends of the cut rim sections, the clamping band is contracted and then the ends of the rim sections are pressed against both sides of the saw-blade (13), whereafter the rim sections on either side of the saw-blade (13) are clamped laterally, the clamping band (2) is relieved again and the saw-blade (13) is removed from the cuts.

7. Method according to one of the preceding claims, wherein the ends of the rim sections are connected to each other by dowel pins (49), for which purpose the clamping band (2) is expanded after positioning the ends of the rim sections opposite to each other, whereby the respective ends of the rim sections are removed from each other, whereafter the dowel pins (49) are provided between holes in the ends of the rim sections and then the clamping band (2) is contracted so as to press the dowel pins (49) into the holes of opposite ends of the rim sections.

8. Apparatus for manufacturing wheel rims, in particular for bicycle wheels, by use of the method according to one of the preceding claims, comprising a clamping band (2) for receiving a section piece bent into a helical spiral having a plurality of windings, means for contracting the clamping band (2) in circular configuration and expanding it again, a cutting means for making a radial cut into the windings of the spiral, cutting clamps (10) on either side of the cutting means for laterally clamping the windings of the spiral prior to cutting them and for displacing both ends of each rim section made by cutting sideways with respect to each other, and means for interconnecting abutting ends of each rim section.

9. Apparatus according to claim 8, comprising fixtures (21) engaging the ends of the spiral and adapted to exert a pressure force thereon.

10. Apparatus according to claim 9, wherein the periphery of the clamping band (2) comprises openings for the passage of the ends of the spiral, and the fixtures (21) are disposed outside of the clamping band (2).

11. Apparatus according to one of claims 8-10, wherein the cutting clamps (10) are mounted to the clamping bands (2) and follow the contraction and expanding movements thereof.

12. Apparatus according to one of claims 8-11, wherein the means for contracting and expanding the clamping band are moved in such manner that fastening means engaging the ends of the clamping band (2) remain substantially at the same angle to the centre of the clamping band (2) when it is contracted and expanded.

13. Apparatus according to one of claims 8-11, wherein the cutting means is a circular saw (13).

14. Apparatus according to one of claims 8-12, for connecting the ends of the rim sections by means of dowel pins (49), the apparatus comprising a movable slide (39) for supporting and positioning the dowel pins (49) in front of respective holes in the opposite ends of the rim sections.

15. Apparatus according to claim 14, wherein the slide (39) is provided with a number of independently movable dowel pin holders (50) corresponding to the number of wheel rims to be manufactured, each dowel pin holder (50) being adapted to receive two dowel pins (49) and being equipped with means for automatically independently positioning the received dowel pins (49) in front of the respective holes in opposite ends of the respective rim sections.

16. Apparatus according to claim 13, comprising means for automatically supplying dowel pins (49) to the slide (39).

## Patentansprüche

1. Verfahren zum Herstellen von Radfelgen, insbesondere für Fahrradräder, bei dem ein Profilteil, das zu einer schraubenförmigen Spirale gebogen ist, die eine Mehrzahl von Windungen aufweist, in ein Klemmband (2) eingesetzt wird, wobei das Klemmband (2) in kreisförmiger Konfiguration auf einen für die Felge erwünschten Durchmesser eingezogen wird,
dadurch gekennzeichnet,
daß die Felgenspirale entsprechend der Anzahl ganzer Windungen in eine Anzahl von Felgen geschnitten wird und beide Enden jedes durch Schneiden gebildeten Felgenabschnitts nach Entspannen des Klemmbands (2) seitlich mit Bezug aufeinander derart versetzt werden, daß die Enden einander gegenüberliegend angeordnet sind, woraufhin das Klemmband (2) erneut eingezogen wird, bis beide Enden jedes Felgenabschnitts auf Stoß liegen, und diese Enden miteinander verbunden werden.

2. Verfahren nach Anspruch 1,
bei dem während des ersten Einzugs des Klemmbandes (2) eine Druckkraft auf die Enden der Spirale ausgeübt wird, wodurch die Spirale fest gegen das Klemmband (2) gepreßt wird.

3. Verfahren nach Anspruch 1 oder 2,
bei dem die Windungen der Spirale an jeder Seite der auszuführenden Schnitte geklemmt werden.

4. Verfahren nach einem der vorangehenden Ansprüche,
bei dem die Spirale in einem umfangsmäßig entspannten Zustand geschnitten wird.

5. Verfahren nach einem der vorangehenden Ansprüche,
bei dem die Länge der Spirale geringfügig größer gewählt wird als die Summe der Umfangslänge der herzustellenden Felgenanzahl, und bei dem die abgeschnittenen Endteile der Spirale nach dem Schneiden entfernt werden.

6. Verfahren nach einem der vorangehenden Ansprüche,
bei dem die Schnitte mittels eines Sägeblattes (13) ausgeführt werden, und bei dem das Sägeblatt (13) nach dem Schneiden vorübergehend in den Schnitten verbleibt, und bei dem das Klemmband nach einem zur Seite gerichteten Entfernen der Enden der geschnittenen Felgenabschnitte eingezogen wird und daraufhin die Enden der Felgenabschnitte gegen beide Seiten des Sägeblatts (13) gepreßt werden, woraufhin die Felgenabschnitte an jeder Seite des Sägeblattes (13) seitlich geklemmt werden, das Klemmband (2) erneut entspannt und das Sägeblatt (13) von den Schnitten entfernt wird.

7. Verfahren nach einem der vorangehenden Ansprüche,
bei dem die Enden der Felgenabschnitte miteinander durch Paßstifte (49) verbunden werden, zu welchem Zweck das Klemmband (2) nach dem Positionieren der Enden der Felgenabschnitte in Gegenüberlage zueinander aufgeweitet wird, wodurch die entsprechenden Enden der Felgenabschnitte voneinander entfernt werden, woraufhin die Paßstifte (49) zwischen Löchern in den Enden der Felgenabschnitte angeordnet werden und worauf das Klemmband (2) derart eingezogen wird, daß die Paßstifte (49) in die Löcher gegenüberliegender Enden der Felgenabschnitte gepreßt werden.

8. Vorrichtung zur Herstellung von Radfelgen, insbesondere für Fahrradräder, unter Anwendung des Verfahrens nach einem der vorangehenden Ansprüche, mit einem Klemmband (2) zur Aufnahme eines Profilteils, das zu einer schraubenförmigen Spirale gebogen ist, die eine Mehrzahl von Windungen aufweist, einer Einrichtung zum Einziehen des Klemmbands (2) in eine kreisförmige Konfigurarion sowie zum erneuten Aufweiten dieses Bands, einer Schneideinrichtung zum Ausführen eines radialen Schnitts in die Windungen der Spirale, Schneidklemmen (10) an jeder Seite der Schneideinrichtung zum seitlichen Klemmen der Windungen der Spirale, bevor diese geschnitten werden, und zum Versetzen beider Enden jedes durch Schneiden gebildeten Felgenabschnitts seitwärts mit Bezug aufeinander, und einer Einrichtung zum Verbinden aneinanderstoßender Enden jedes Felgenschnitts miteinander.

9. Vorrichtung nach Anspruch 8,
mit Spannmitteln (21), welche die Enden der Spirale beaufschlagen und dazu ausgelegt sind, auf diese eine Druckkraft auszuüben.

10. Vorrichtung nach Anspruch 9,
wobei der Umfangsrand des Klemmbandes (2) Öffnungen für die Einführung der Enden der Spirale umfaßt, und wobei die Spannmittel (21) außerhalb des Klemmbandes (2) angeordnet sind.

11. Vorrichtung nach einem der Ansprüche 8 bis 10,
wobei die Schneidklemmen (10) an den Klemmbändern (2) angebracht sind und deren Einzieh- und Aufweitungs- Vorgängen folgen.

12. Vorrichtung nach einem der Ansprüche 8 bis 11,
wobei die Einrichtungen zum Einziehen und Aufweiten des Klemmbands derart bewegt werden, daß die Enden des Klemmbands (2) beaufschlagende Befestigungsmittel im wesentlichen unter demselben Winkel zum Zentrum des Klemmbands (2) verbleiben, wenn dieses eingezogen und aufgeweitet wird.

13. Vorrichtung nach einem der Ansprüche 8 bis 11,
wobei die Schneideinrichtung eine kreisförmige Säge (13) ist.

14. Vorrichtung nach einem Ansprüche 8 bis 12 zum Verbinden der Enden der Felgenabschnitte mittels Paßstiften (49), wobei die Vorrichtung einen beweglichen Schieber (39) zum Tragen und Positionieren der Paßstifte (49) vor jeweiligen Löchern in den gegenüberliegenden Enden der Flegenabschnitte umfaßt.

15. Vorrichtung nach Anspruch 14,
wobei der Schieber (39) mit einer Anzahl unabhängig bewegbarer Paßstifthalter (50) versehen ist, die der Anzahl der herzustellenden Radfelgen enstspricht, wobei jeder Paßstifthalter (50) dazu ausgelegt ist, zwei Paßstifte (49) aufzunehmen sowie mit Mitteln zum automatischen unabhängigen Positionieren der aufgenommenen Paßstifte (49) vor den jeweiligen Löchern in gegenüberliegenden Enden der jeweiligen Felgenabschnitte ausgestattet ist.

16. Vorrichtung nach Anspruch 13,
mit Mitteln zum automatischen Zuführen von Paßstiften (49) zum Schieber (39).

## Revendications

1. Procédé de fabrication de jantes de roues, en particulier pour roues de bicyclette, dans lequel une pièce de section courbée en spirale hélicoïdale ayant une série d'enroulements est placée dans une bande de serrage (2), ladite bande de serrage (2) est contractée selon une configuration circulaire à un diamètre voulu pour la jante, caractérisé en ce que la spirale de jante est découpée en un nombre de jantes correspondant au nombre d'enroulements entiers, et ensuite, après relâchement de la bande de serrage (2), les deux extrémités de chaque section de jante formée par découpe sont déplacées latéralement l'une par rapport à l'autre de telle sorte que lesdites extrémités sont positionnées en vis-à-vis l'une de l'autre, après quoi la bande de serrage (2) est de nouveau contractée jusqu'à ce que les deux extrémités de chaque section de jante viennent en butée, et ces extrémités sont interconnectées.

2. Procédé selon la revendication 1, dans lequel une force de pression est exercée sur les extrémités de la spirale pendant la première contraction de la bande de serrage (2) pressant ainsi la spirale étroitement contre la bande de serrage (2).

3. Procédé selon la revendication 1 ou 2, dans lequel les enroulements de la spirale sont serrés de chaque côté des coupes devant être faites.

4. Procédé selon l'une des revendications précédentes, dans lequel la spirale est découpée à l'état circonférentiellement relâché.

5. Procédé selon l'une des revendications précédentes, dans lequel la longueur de la spirale est choisie légèrement supérieure à la somme de la longueur circonférentielle du nombre de jantes à fabriquer, et dans lequel les parties d'extrémité découpées de la spirale sont éliminées après l'opération de découpe.

6. Procédé selon l'une des revendications précédentes, dans lequel les coupes sont faites au moyen d'une lame de scie (13) et dans lequel la lame de scie (13) reste temporairement dans les coupes après l'opération de découpe et, après l'élimination latérale des extrémités des sections de jante découpées, la bande de serrage est contractée et ensuite les extrémités des sections de jante sont pressées contre les deux faces de la lame de scie (13), après quoi les sections de jante des deux côtés de la lame de scie (13) sont serrées latéralement, la bande de serrage (2) est de nouveau libérée et la lame de scie (13) est enlevée des coupes.

7. Procédé selon l'une des revendications précédentes, dans lequel les extrémités des sections de jante sont connectées l'une à l'autre par des goujons (49) auxquelles fins la bande de serrage (2) est dilatée après positionnement des extrémités des sections de jante en vis-à-vis l'une de l'autre, grâce à quoi les extrémités respectives des sections de jante sont éloignées l'une de l'autre, après quoi les goujons (49) sont placés entre des trous dans les extrémités des sections de jante et ensuite la bande de serrage (2) est contractée de façon à presser les goujons (49) dans les trous des extrémités opposées des sections de jante.

8. Appareil pour la fabrication de jantes de roues, en particulier de roues de bicyclette, par utilisation du procédé selon l'une des revendications précédentes, comprenant une bande de serrage (2) pour recevoir une pièce de section courbée selon une spirale hélicoïdale ayant une série d'enroulements, des moyens pour contracter la bande de serrage (2) selon une configuration circulaire et la redilater, un moyen de coupe pour réaliser une découpe radiale dans les enroulements de la spirale, des pinces de découpe (10) de chaque côté du moyen de coupe pour serrer latéralement les enroulements de la spirale avant de les couper et pour déplacer les deux extrémités de chaque section de jante faite par découpe latéralement l'une par rapport à l'autre, et des moyens pour interconnecter les extrémités en butée de chaque section de jante.

9. Appareil selon la revendication 8, qui comprend des moyens de fixation (21) venant en prise avec les extrémités de la spirale et adaptés à exercer une force de pression sur celle-ci.

10. Appareil selon la revendication 9, dans lequel la périphérie de la bande de serrage (2) comporte des ouvertures pour le passage des extrémités de la spirale, et dans lequel les fixations (21) sont disposées à l'extérieur de la bande de serrage (2).

11. Appareil selon l'une des revendications 8 à 10, dans lequel les pinces de découpe (10) sont montées sur les bandes de serrage (2) et suivent les mouvements de contraction et de dilatation de celles-ci.

12. Appareil selon l'une des revendications 8 à 11, dans lequel les moyens pour contracter et dilater la bande de serrage sont déplacés de telle manière que des moyens de fixation venant en prise avec les extrémités de la bande de serrage (2) restent sensiblement selon le même angle par rapport au centre de la bande de serrage (2) lorsqu'elle est contractée et dilatée.

13. Appareil selon l'une des revendications 8 à 11, dans lequel le moyen de coupe est une scie circulaire (13).

14. Appareil selon l'une des revendications 8 à 12, pour connecter les extrémités de section de jante au moyen de goujons (49), ledit appareil comprenant un chariot mobile (39) pour supporter et positionner les goujons (49) en vis-à-vis de trous respectifs dans les extrémités opposées des sections de jante.

15. Appareil selon la revendication 14, dans lequel le chariot (39) est muni d'une série de supports (50) de goujons indépendamment mobiles et correspondant au nombre de jantes de roue devant être fabriquées, chacun des supports (50) de goujons étant adapté à recevoir deux goujons (49) et étant équipé à l'aide de moyens pour positionner automatiquement et indépendamment les goujons reçus (49) en vis-à-vis des trous respectifs dans les extrémités opposées des sections de jante respectives.

16. Appareil selon la revendication 13, comprenant des moyens pour fournir automatiquement des goujons (49) au chariot (39).
